# EUROPÄISCHE PATENTSCHRIFT

(11) **EP 3 220 164 B1**
(45) Veröffentlichungstag und Bekanntmachung des Hinweises auf die Patenterteilung: **07.03.2018**
(21) Anmeldenummer: 16160167.9
(22) Anmeldetag: 14.03.2016
(51) Int. Cl.: G01S 17/02, G01S 17/08, G01N 15/02, G01S 17/42, G01S 7/48

(54) **VERFAHREN ZUM BETREIBEN EINES ABSTANDSMESSENDEN ÜBERWACHUNGSSENSORS UND ÜBERWACHUNGSSENSOR**
METHOD FOR OPERATING A DISTANCE MEASURING MONITORING SENSOR AND MONITORING SENSOR
PROCÉDÉ DE FONCTIONNEMENT D'UN CAPTEUR ÉCARTOMÉTRIQUE DE SURVEILLANCE ET CAPTEUR ÉCARTOMÉTRIQUE DE SURVEILLANCE

(43) Veröffentlichungstag der Anmeldung: 20.09.2017
(73) Patentinhaber: SICK AG, 79183 Waldkirch/Breisgau (DE)
(72) Erfinder: Jachmann, Fabian, 79102 Freiburg (DE)
(74) Vertreter: Manitz Finsterwald Patentanwälte PartmbB

(56) Entgegenhaltungen:
- EP-A1- 2 735 887
- DE-A1- 19 503 960

## Beschreibung

Die vorliegende Erfindung betrifft ein Verfahren zum Betreiben eines abstandsmessenden Überwachungssensors zur Überwachung eines zumindest zweidimensionalen Schutzfeldes, welches in mehrere sektorförmige, zyklisch abtastbare Überwachungsfelder unterteilt ist, wobei der Überwachungssensor zumindest einen Lichtsender und zumindest einen Lichtempfänger umfasst.

Ein derartiger Überwachungssensor kann beispielsweise als Laserscanner ausgebildet sein. Ein von einem Lichtsender, z.B. einem Laser oder dergleichen, erzeugter Sendelichtstrahl wird über eine Lichtablenkeinheit in das zu überwachende Schutzfeld gelenkt und dort von einem gegebenenfalls vorhandenen Objekt reflektiert oder remittiert. Das reflektierte bzw. remittierte Licht gelangt wieder zurück zu dem Überwachungssensor und wird dort von dem Lichtempfänger detektiert. Die Lichtablenkeinheit ist in der Regel schwenkbar bzw. drehbar ausgestaltet, so dass der von dem Lichtsender erzeugte Lichtstrahl ein der Schwenk- oder Drehbewegung entsprechendes Schutzfeld überstreicht. Wird ein von dem Lichtempfänger empfangenes reflektiertes Lichtsignal aus dem Schutzbereich empfangen, so kann aus der Winkelstellung der Ablenkeinheit auf die Winkellage des Objektes im Schutzfeld geschlossen werden.

Der Abstand zwischen dem Überwachungssensor und dem erfassten Objekt kann in an sich bekannter Weise auf der Grundlage der Lichtlaufzeit oder der Phasenverschiebung zwischen dem Sendelicht und dem Empfangslicht bestimmt werden. Befindet sich im Schutzfeld ein unzulässiges Objekt, so kann von dem Überwachungssensor ein entsprechendes Objekterfassungssignal ausgegeben werden.

Derartige Überwachungssensoren werden zum Beispiel bei Maschinen eingesetzt, bei denen aus Sicherheitsgründen ein Gefahrenbereich überwacht werden muss, der beim Betrieb der Maschine von einer Bedienperson nicht verletzt werden darf. Wird durch den Überwachungssensor die Anwesenheit eines unzulässigen Objektes, beispielsweise ein Bein einer Bedienperson, im Gefahrenbereich festgestellt, wird auf der Grundlage des Objekterfassungssignals ein Abschalten der Maschine o.ä. bewirkt.

Allerdings können auch kleine Partikel wie in das Schutzfeld dringender Staub, umherfliegende Späne, Regentropfen oder Schneeflocken zu einer unerwünschten Abschaltung der Maschine führen. Derartige falsch-positive Objekterfassungssignale reduzieren die Verfügbarkeit der Maschine.

In DE 103 13 194 B4 wird vorgeschlagen, dass unter Berücksichtigung des Abstands des Objekts von dem Sensor und dem Winkelbereich, über den sich das Objekt erstreckt, nur dann ein Objekterfassungssignal erzeugt wird, wenn das Objekt eine vorgegebene Mindestgröße aufweist.

In DE 10 2009 055 990 B4 wird vorgeschlagen, dass nur solche Objekte ein Objekterfassungssignal auslösen können, die sich länger als eine vorgebbare Verweildauer innerhalb des Schutzfeldes befinden. Dem liegt der Gedanke zugrunde, dass sich Partikel wie Späne oder dergleichen, die zu einer Fehlabschaltung der Maschine führen können, relativ rasch bewegen und daher das Schutzfeld nach kurzer Zeit wieder verlassen.

Da kleine Partikel, die sich sehr nahe an dem Überwachungssensor befinden, einen relativ großen Winkelbereich überdecken können und somit größere, weiter entfernte Objekte verdecken können, muss bei nah am Überwachungssensor vorbeifliegenden Partikeln aus Sicherheitsgründen auch dann ein zum Abschalten der Maschine führendes Objekterfassungssignal ausgegeben werden, wenn dies aufgrund der Größe des detektierten Partikels an sich nicht erforderlich wäre. Dies reduziert die Verfügbarkeit der Maschine. Eine Erhöhung der Verfügbarkeit wäre im Umkehrschluss nur auf Kosten der Sicherheit möglich.

EP2 735 887 A1 beschreibt ein Auswerteverfahren für einen Laserscanner, bei dem die räumliche Ausdehnung der von den Sendelichtpulsen erzeugten Lichtflecke relativ groß im Verhältnis zum Winkelabstand von zwei benachbarten Sendelichtpulsen ist. Mit dem dort beschriebenen Verfahren soll eine zuverlässige Differenzierung hinsichtlich der Größe eines erfassten Objekts ermöglicht werden, um eine Klassifizierung oder Unterscheidung erkannter Objekte nach Objektgröße zu ermöglichen.

DE 195 03 960 A1 betrifft eine Radarvorichtung für Fahrzeuge, bei welcher die Größe eines erfassten Objekts auf der Grundlage des ermittelten Abstandes und aufgrund der ermittelten Größe des Winkelbereichs ermittelt wird.

Es ist die Aufgabe der Erfindung, ein Verfahren zum Betreiben eines abstandsmessenden Überwachungssensors anzugeben, welches eine zuverlässige Erkennung von Objekten, welche vorgegebene Kriterien zum Erzeugen eines Objekterfassungssignals erfüllen, gewährleistet und gleichzeitig die Häufigkeit von falsch-positiven Objekterfassungssignalen, die von Objekten, die aufgrund ihrer Größe die Sicherheit nicht beeinträchtigen können, zu minimieren, so dass der Überwachungssensor bzw. eine durch den Überwachungssensor überwachte Maschine mit hoher Verfügbarkeit betrieben werden können.

Die Lösung der Aufgabe erfolgt durch ein Verfahren mit den Merkmalen des Anspruchs 1.

Das erfindungsgemäße Verfahren zum Betreiben eines abstandsmessenden Überwachungssensors zur Überwachung eines zumindest zweidimensionalen Schutzfeldes, welches in mehrere sektorförmige, zyklisch abtastbare Überwachungsfelder unterteilt ist, wobei der Überwachungssensor zumindest einen Lichtsender und zumindest einen Lichtempfänger umfasst, umfasst die Schritte:
- Aussenden eines Sendelichtstrahls in das Schutzfeld durch den Lichtsender,
- Empfangen von Licht, welches von einem gegebenenfalls in dem Schutzfeld vorhandenen Objekt reflektiert oder remittiert wird, durch den Lichtempfänger,
- Erzeugen eines spezifischen Empfangssignals für das jeweilige Überwachungsfeld auf der Grundlage des empfangenen Lichts, wobei ein jeweiliges Empfangssignal Informationen über die Winkelposition des Überwachungsfeldes und über den Abstand eines darin befindlichen Objekts von dem Überwachungssensor umfasst, wobei innerhalb eines Zyklus alle Überwachungsfelder des Schutzfeldes einmal abgetastet werden,
- Ermitteln der Größe eines Winkelbereichs, über den sich ein jeweiliges erfasstes Objekt erstreckt,
- Ermitteln der Größe des Objekts auf der Grundlage des ermittelten Abstandes und aufgrund der ermittelten Größe des Winkelbereichs,
- Klassifizieren des Objekts als Partikel oder Großobjekt auf der Grundlage der ermittelten Größe des Objekts und eines vorbestimmten Schwellenwertes für die Größe, wobei das Objekt als Partikel klassifiziert wird, wenn es kleiner als der Schwellenwert ist und als Großobjekt klassifiziert wird, wenn es größer als der Schwellenwert ist, und
- Erzeugen eines Objekterfassungssignals auf der Grundlage der gespeicherten Erfassungssignale, wenn festgestellt wird, dass sich zumindest ein Großobjekt für eine vorgegebene erste Anzahl von aufeinanderfolgenden Zyklen jeweils zumindest in einem der Überwachungsfelder befindet, oder wenn festgestellt wird, dass sich zumindest ein Partikel für eine vorbestimmte zweite Anzahl von aufeinanderfolgenden Zyklen im Wesentlichen winkelstationär in zumindest einem Überwachungsfeld befindet.

Das zyklische Abtasten der Überwachungsfelder erfolgt bei dem erfindungsgemäßen Überwachungssensor vorzugsweise dadurch, dass zeitlich nacheinander pulsförmige Sendelichtstrahlen in die jeweiligen Überwachungsfelder ausgesendet werden und für jedes Überwachungsfeld ein spezifisches Empfangssignal erzeugt und ggf. gespeichert wird. Demnach werden diskrete Winkelpositionen abgetastet.

Da die Erfassungssignale über einen bestimmten Zeitraum, der durch die genannte erste Anzahl von aufeinanderfolgenden Zyklen und durch die Dauer eines jeweiligen Zyklus bestimmt ist, betrachtet werden, kann nicht nur die Größe, sondern auch der Bewegungszustand eines Objekts berücksichtigt werden. Wenn ein Objekt in jedem der aufeinanderfolgenden Zyklen in demselben oder denselben Überwachungsfeldern erscheint, wird es als ein winkelstationäres Objekt angesehen. Unter einem winkelstationären Objekt wird in diesem Zusammenhang ein Objekt verstanden, welches keine Bewegungskomponente oder zumindest keine im Rahmen der Auflösung und/oder der Messgenauigkeit des Überwachungssensors detektierbare Bewegungskomponente aufweist, die zu einer Änderung seiner Winkelposition bzw. zu einem Wechsel des Überwachungsfeldes führt, und insbesondere also auch sich stationär, also unbeweglich, in einem Überwachungsfeld aufhaltende Objekte. Erscheint ein Objekt hingegen über die Zyklen hinweg in einem oder mehreren unterschiedlichen Überwachungsfeldern, muss es sich um ein bewegliches Objekt handeln. Unter einem beweglichen Objekt wird in diesem Zusammenhang insbesondere ein Objekt verstanden, welches zumindest eine Bewegungskomponente aufweist, die zu einer Änderung seiner Winkelposition bzw. zu einem Wechsel des Überwachungsfeldes führt.

Das Klassifizieren, ob es sich bei einem erfassten Objekt um ein Großobjekt oder um ein Partikel handelt, kann beispielsweise mit Hilfe einer Lookup-Tabelle für den Abstand und den Winkelbereich bzw. eine damit zusammenhängende Größe erfolgen.

Sofern aufgrund der Klassifikation festgestellt wurde, dass es sich um ein Großobjekt handelt, d.h. um ein Objekt, welches mindestens die Größe eines als sicherheitskritisch angesehenen, vorgegebenen Referenzobjekts besitzt, wird ein Objekterfassungssignal ausgegeben, wenn es sich innerhalb der genannten ersten Anzahl von Zyklen innerhalb des Schutzfeldes befindet, und zwar unabhängig von dessen Bewegungszustand.

Im Unterschied hierzu wird bei der Erfassung eines in der Regel als nicht sicherheitskritisch angesehenen Partikels, dessen Größe kleiner ist als die Größe des Referenzobjekts ist, nur dann ein Objekterfassungssignal ausgegeben, wenn festgestellt wurde, dass sich dieses Objekt während der vorgegebenen Anzahl von Abtastzyklen nicht bewegt.

Partikel können also zum Beispiel, in der Regel statistisch verteilte, kleine Objekte wie umherfliegende Späne, Schneeflocken, Regentropfen oder Staubpartikel sein.

In dem Zusammenhang bedeutet der Ausdruck "im Wesentlichen" winkelstationär in zumindest einem Überwachungsfeld, dass sich das Partikel während des betrachteten Zeitraums stets nicht nur in dem oder denselben Überwachungsfeldern befindet, sondern auch vorübergehend in unmittelbar benachbarten Überwachungsfeldern aufhalten kann, um dennoch das Kriterium "winkelstationär" zu erfüllen. Damit wird dem Umstand Rechnung getragen, dass beispielsweise ein sehr kleines, an sich stillstehendes Partikel, das sich auf der Grenze zwischen zwei benachbarten Überwachungsfeldern befindet, aufgrund von Messungenauigkeiten in verschiedenen Zyklen sowohl in dem einen als auch in dem anderen Überwachungsfeld detektiert werden kann.

Unter einem sektorförmigen Überwachungsfeld wird insbesondere ein Überwachungsfeld verstanden, welches sowohl die Form eines Kreisausschnitts oder Kreissektors als auch die Form eines Kugelausschnitts oder Kugelsektors aufweisen kann. Bei einer Hauptanwendung ist ein sektorförmiges Überwachungsfeld jedoch ein sektorförmiger Ausschnitt aus einer Scanebene, die das Schutzfeld bildet.

Das erfindungsgemäße Verfahren umfasst also beide Prüfschritte, also zum einen, ob sich zumindest ein Großobjekt für eine vorgegebene erste Anzahl von aufeinanderfolgenden Zyklen in zumindest einem der Überwachungsfelder befindet, und zum anderen, ob sich zumindest ein Partikel für eine vorbestimmte zweite Anzahl von aufeinanderfolgenden Zyklen im Wesentlichen winkelstationär in zumindest einem Überwachungsfeld befindet. Wenn zumindest eine dieser Bedingungen erfüllt ist, wird ein Objekterfassungssignal erzeugt. Anspruch 1 ist also nicht so zu verstehen, dass das erfindungsgemäße Verfahren nur zwei Prüfalternativen umfassen würde.

Der Begriff "Objekterfassungssignal" ist dabei so zu verstehen, dass es erzeugt wird, wenn die Auswertung der reflektierten oder remittieren Signale eine Interpretation dahingehend erlauben, dass eine Verletzung des Schutzfeldes vorliegt.

Die genannte erste Anzahl der Abtastzyklen beträgt mindestens 2, insbesondere 3, 4 oder 5. Es versteht sich, dass die Festlegung dieser Anzahl einen Kompromiss darstellt zwischen der Ansprechverzögerung des Überwachungssensors und der Fehleralarmrate. Unter anderem kann die Anzahl auch von der Dauer des Abtastzyklus abhängig sein, um einen sinnvollen Beobachtungszeitraum zu definieren.

Bei diesem erfindungsgemäßen Verfahren werden nur (im oben definierten Sinn) winkelstationäre Partikel als sicherheitskritisch angesehen, da diese, wenn sie sich nahe am Sensor befinden, möglicherweise ein Großobjekt, das sich in einem größeren Abstand vom Sensor befindet, verdecken könnten. Sofern sich jedoch Partikel, selbst wenn sie sich nahe am Sensor befinden, innerhalb des Schutzfeldes bewegen, wird kein Objekterfassungssignal erzeugt, obwohl auch diese Partikel möglicherweise ein Großobjekt verdecken oder verschatten könnten. Dem liegt der überraschend einfache Gedanke zugrunde, dass es extrem unwahrscheinlich ist, dass sich ein Partikel und ein durch das Partikel verschattetes Großobjekt während der betrachteten ersten Anzahl von Zyklen mit derselben Geschwindigkeit und in dieselbe Richtung bewegen. Da also unterschieden wird, ob sich ein aufgrund seiner Größe als Partikel identifiziertes Objekt bewegt oder winkelstationär ist, und nur im letzteren Fall ein Objekterfassungssignal erzeugt wird, wird die Verfügbarkeit des Überwachungssensors bzw. einer daran angeschlossenen Maschine erhöht, ohne dass die Sicherheit beeinträchtigt wird.

Vorzugsweise sind die erste Anzahl und die zweite Anzahl von aufeinanderfolgenden Zyklen gleich. Dies vereinfacht die zu Erzeugung des Objekterfassungssignals notwendige Auswertung. Es können jedoch auch unterschiedliche Anzahlen und damit unterschiedliche Zeitdauern, für die die jeweiligen Bedingungen erfüllt sein müssen, zugrunde gelegt werden.

Gemäß einer vorteilhaften Ausgestaltung des Verfahrens wird ferner auch dann ein Objekterfassungssignal erzeugt, wenn für eine vorgegebene dritte Anzahl von aufeinanderfolgenden Zyklen festgestellt wird, dass sich zumindest ein Großobjekt und zumindest ein Partikel jeweils zumindest für einen Teil dieser Zyklen in zumindest einem der Überwachungsfelder befinden. Hierdurch wird beispielsweise der Fall berücksichtigt, dass ein Großobjekt zumindest zeitweise, d.h. für einen Teil der aufeinanderfolgenden Zyklen durch ein Partikel verdeckt wird oder verdeckt sein könnte. Hierdurch erhöht sich die Sicherheit des Überwachungssensors, da die Gefahr einer potentiellen Nichterkennung von sicherheitsrelevanten Großobjekten vermindert wird. Eine hierdurch gegebenenfalls verminderte Verfügbarkeit aufgrund einer eventuell erhöhten Häufigkeit von Fehlalarmen kann dabei in Kauf genommen werden.

Die erste, zweite und dritte Anzahl sind bevorzugt gleich. Es können jedoch auch hier unterschiedliche Anzahlen und damit unterschiedliche Zeitdauern, für die die jeweiligen Bedingungen erfüllt sein müssen, zugrunde gelegt werden.

Gemäß einer anderen vorteilhaften Weiterbildung wird ferner auch dann ein Objekterfassungssignal erzeugt, wenn für eine vorgegebene dritte Anzahl von aufeinanderfolgenden Zyklen festgestellt wird, dass sich zumindest ein Großobjekt und zumindest ein Partikel jeweils zumindest für einen Teil dieser Zyklen in zumindest einem der Überwachungsfelder befinden und das zumindest eine Partikel im Wesentlichen winkelstationär ist. Dies stellt eine gewisse Einschränkung der zuvor beschriebenen Ausgestaltung dar, da im Unterschied zu dieser das detektierte Partikel winkelstationär sein muss. Wie vorstehend bereits erläutert wurde, liegt hier ebenfalls der Gedanke zugrunde, dass die Wahrscheinlichkeit, dass sich ein Großobjekt und ein das Großobjekt verdeckendes Partikel gleich schnell und in dieselbe Richtung bewegen, äußerst gering ist. Hierdurch kann die Verfügbarkeit erhöht werden, ohne dass die Sicherheit beeinträchtigt wird.

Gemäß einer weiteren vorteilhaften Ausgestaltung sind ein Großobjektindex und für jedes Überwachungsfeld ein jeweiliger Partikelindex vorgesehen, wobei das Feststellen, ob sich zumindest ein Großobjekt für eine vorgegebene erste Anzahl von aufeinanderfolgenden Zyklen in zumindest einem der Überwachungsfelder befindet, umfasst, dass der Großobjektindex um 1 inkrementiert wird, wenn in einem Zyklus die Anwesenheit zumindest eines Großobjekts detektiert wurde, und das Erzeugen des Objekterfassungssignals umfasst, dass ein Objekterfassungssignal erzeugt wird, wenn der Großobjektindex die vorgegebene erste Anzahl erreicht hat, und wobei das Feststellen, ob sich zumindest ein Partikel für eine vorgegebene zweite Anzahl von aufeinanderfolgenden Zyklen im Wesentlichen winkelstationär in zumindest einem Überwachungsfeld befindet, umfasst, dass in einem jeweiligen Zyklus ein jeweiliger Partikelindex um 1 inkrementiert wird, wenn in einem Zyklus die Anwesenheit eines Partikels in dem diesen Partikelindex zugeordneten Überwachungsfeld oder einem unmittelbar benachbarten Überwachungsfeld detektiert wurde, und das Erzeugen des Objekterfassungssignals umfasst, dass das Maximum aller Partikelindizes ermittelt wird und ein Objekterfassungssignal erzeugt wird, wenn das Maximum die vorgegebene zweite Anzahl erreicht hat. Hierdurch können die genannten Feststellungen und das darauf beruhende Erzeugen eines Objekterfassungssignals in einfacher Weise durchgeführt werden.

In dem Zusammenhang hat es sich als vorteilhaft erwiesen, wenn das Erzeugen eines Objekterfassungssignals, wenn für eine vorgegebene dritte Anzahl von aufeinanderfolgenden Zyklen festgestellt wird, dass sich zumindest ein Großobjekt und zumindest ein Partikel jeweils zumindest für einen Teil dieser Zyklen in zumindest einem der Überwachungsfelder befinden, umfasst, dass die Summe aus dem Großobjektindex und dem Maximum der Partikelindizes gebildet wird, und dass das Objekterfassungssignal erzeugt wird, wenn die Summe die vorgegebene dritte Anzahl erreicht hat. Analog zu der vorstehend genannten Ausgestaltung kann auf diese Weise ein Objekterfassungssignal erzeugt werden, wenn beispielsweise der Fall eintritt, dass ein Großobjekt nur zeitweilig durch ein Partikel verdeckt wird.

Alternativ oder zusätzlich können auch die Objekterfassungssignale für die Fälle, bei denen nur zumindest ein Großobjekt oder nur zumindest ein Partikel für eine vorbestimmte Anzahl von Zyklen in zumindest einem Überwachungsfeld anwesend sind, auf der Grundlage der Summe aus dem Großobjektindex und dem Maximum der Partikelindizes erzeugt werden.

Gemäß einer weiteren vorteilhaften Ausgestaltung der Erfindung umfasst das Feststellen, ob sich zumindest ein Großobjekt für eine vorgegebene erste Anzahl von aufeinanderfolgenden Zyklen in zumindest einem der Überwachungsfelder befindet, ferner, dass der Großobjektindex zurückgesetzt wird, wenn in einem Zyklus die Abwesenheit von Großobjekten detektiert wurde. Das Feststellen, ob sich zumindest ein Partikel für eine vorgegebene zweite Anzahl von aufeinanderfolgenden Zyklen im Wesentlichen winkelstationär in zumindest einem Überwachungsfeld befindet, kann ferner umfassen, dass in einem jeweiligen Zyklus ein jeweiliger Partikelindex zurückgesetzt wird, wenn für das zugeordnete Erfassungsfeld in dem unmittelbar vorgehenden Zyklus die Anwesenheit eines Partikels und in dem aktuellen Zyklus die Abwesenheit dieses Partikels detektiert wurde. Unter einem Zurücksetzen eines jeweiligen Index wird insbesondere ein Zurücksetzen auf den Wert Null verstanden. Mit diesen Ausgestaltungen kann in einfacher Weise den Fällen Rechnung getragen werden, dass ein Großobjekt und/oder ein Partikel vor Ablauf einer durch die jeweilige Anzahl von Zyklen vorgegebenen Zeitdauer das Schutzfeld verlassen.

Gemäß einer vorteilhaften Abwandlung unterbleibt ein Zurücksetzen des Großobjektindex, wenn innerhalb desjenigen Zyklus, in dem die Abwesenheit eines im vorhergehenden Zyklus anwesenden Großobjekts detektiert wurde, zugleich die Anwesenheit eines Partikels detektiert wurde. Dies deckt z.B. den Fall ab, dass während einer betrachteten Anzahl von Zyklen plötzlich ein Partikel ein zuvor bereits detektiertes Großobjekt verdeckt.

Alternativ oder zusätzlich unterbleibt ein Zurücksetzen eines Partikelindex, wenn innerhalb desjenigen Zyklus, in dem die Abwesenheit eines im vorhergehenden Zyklus anwesenden Partikels detektiert wurde, zugleich die Anwesenheit eines Großobjekts detektiert wurde. Dies deckt z.B. den Fall ab, dass während einer betrachteten Anzahl von Zyklen plötzlich ein Großobjekt auftaucht, das zuvor möglicherweise durch ein Partikel verdeckt wurde.

Vorteilhafterweise umfasst das Ermitteln der Größe eines Winkelbereichs, über den sich ein jeweiliges Objekt erstreckt, dass die Größe des Winkelbereichs auf der Grundlage der Anzahl benachbarter Überwachungsfelder, bei denen die Anwesenheit eines Objekts bei im Wesentlichen dem gleichen Abstand festgestellt wurde, und deren Winkelabstände ermittelt wird. Unter dem Ausdruck "bei im Wesentlichen dem gleichen Abstand" werden insbesondere auch solche Fälle verstanden, dass die Empfangssignale für ein ausgedehntes Objekt aufgrund dessen Gestalt oder Lage im Raum nicht identische Abstandswerte liefern, es jedoch sehr wahrscheinlich ist, dass es sich um ein zusammenhängendes Objekt und nicht um mehrere Einzelobjekte handelt. Es können beispielsweise Grenzwerte für die jeweiligen Abstandswerte festgelegt werden, die eine Feststellung erlauben, dass die Empfangssignale benachbarter Überwachungsfelder einem einzigen Objekt und nicht etwa zwei Objekten zuzuordnen sind, die bezüglich ihrer Winkelposition zwar benachbart erscheinen, jedoch unterschiedliche Abstände zu dem Sensor aufweisen.

Gemäß noch einer weiteren vorteilhaften Ausgestaltung werden die während eines jeweiligen Zyklus erzeugten Empfangssignale für eine vorbestimmte Anzahl an Zyklen gespeichert und das Objekterfassungssignal wird auf der Grundlage der gespeicherten Empfangssignale erzeugt. Die Empfangssignale können beispielsweise in Form einer Tabelle, insbesondere einer FIFO-Tabelle (first-in-first-out), gespeichert werden.

Vorteilhafterweise ist der Überwachungssensor ein Laserscanner, welcher zur Überwachung von einer oder mehreren Abtastflächen ausgelegt ist. Die eine oder die mehreren Abtastflächen können insbesondere eben oder konisch sein. Demnach kann in entsprechender Weise das Schutzfeld zweidimensional oder dreidimensional sein, wobei bei einem dreidimensionalen Schutzfeld der Laserscanner eine zweite Scanrichtung aufweisen kann oder mehrere Lichtsender/-empfängerpaare aufweisen kann, die z.B. unterschiedliche Azimutwinkel besitzen können.

Die Erfindung betrifft ferner einen abstandsmessenden Überwachungssensor zur Überwachung eines zumindest zweidimensionalen Schutzfeldes, welches in mehrere sektorförmige, zyklisch abtastbare Überwachungsfelder unterteilt ist, wobei der Überwachungssensor zumindest einen Lichtsender, zumindest einen Lichtempfänger und eine Steuereinheit umfasst, wobei die Steuereinheit zum Durchführen des Verfahrens gemäß einem der vorhergehenden Ansprüche ausgelegt ist.

Weitere vorteilhafte Ausgestaltungen der Erfindung ergeben sich aus den Unteransprüchen, der Beschreibung und den Zeichnungen.

Die Erfindung wird im Folgenden beispielhaft mit Bezug auf die Zeichnungen beschrieben. Es zeigen:
- Fig. 1 bis 3: schematische Darstellungen eines Überwachungssensors zur Durchführung des erfindungsgemäßen Verfahrens, in dessen Schutzfeld Objekte unterschiedlicher Größe und in unterschiedlichem Abstand anwesend sind;
- Fig. 4: eine Tabelle, in welcher beispielhaft die für eine Klassifikation eines Objekts als Großobjekt erforderliche Mindestanzahl der verletzten Überwachungsfelder in Abhängigkeit von dem Abstand angegeben ist; und
- Fig. 5 bis 7: Tabellen, welche in schematischer Weise Empfangssignale für verschiedene Objektkonstellationen im Schutzfeld eines Überwachungssensors wiedergeben.

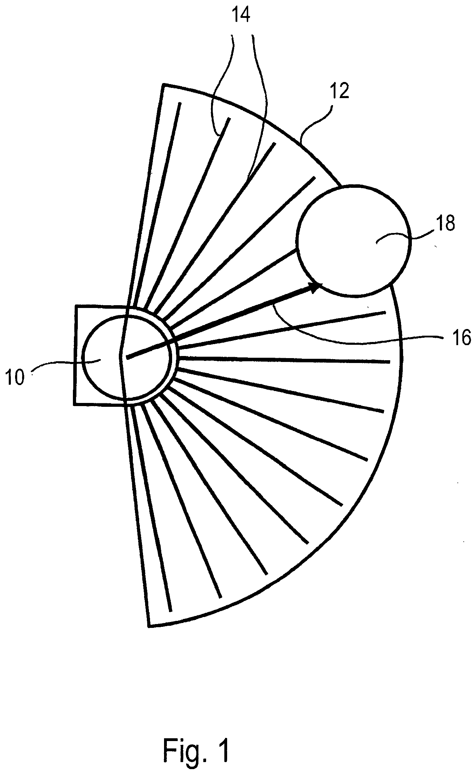

Mit Bezug auf Fig. 1 bis 3 wird nachfolgend zunächst die der vorliegenden Erfindung zugrundeliegende Problematik erläutert.

Fig. 1 bis 3 zeigen einen abstandsmessenden Überwachungssensor 10, beispielsweise einen Laserscanner, welcher im vorliegenden Beispiel ein sektorförmiges Schutzfeld 12 überwacht, welches sich ungefähr über einen Winkelbereich von 165° erstreckt.

Der Überwachungssensor 10 weist einen Lichtsender zum Aussenden eines Sendelichtstrahls 16 in das Schutzfeld 12, einen Lichtempfänger zum Empfangen von Licht, welches von einem gegebenenfalls in dem Schutzfeld vorhandenen Objekt (in den vorliegenden Beispielen von einem Partikel 20 oder einem Großobjekt 18) reflektiert oder remittiert wird, sowie einer Ablenkeinheit, welche dazu ausgelegt ist, den Sendewinkel, d.h. den Winkel, in dem der Sendelichtstrahl 16 bezogen auf das Schutzfeld 12 ausgesendet wird, und ggf. auch den Empfangswinkel, d.h. die Winkelrichtung, aus welcher bezogen auf das Schutzfeld 12 von einem Objekt reflektiertes oder remittiertes Licht empfangen wird, synchron zum Sendewinkel zu verändern.

Nach einer bestimmten Winkeländerung kann jeweils ein Lichtpuls ausgesendet und gegebenenfalls zurückgestreutes Empfangslicht erfasst werden. Auf diese Weise ergibt sich eine diskrete Anzahl von Lichtpfaden 14, welche nacheinander durch den Überwachungssensor 10 abgetastet werden. Jedem Lichtpfad 14 ist hierbei ein sektorförmiges Überwachungsfeld zugeordnet, welches sich zu beiden Seiten des jeweiligen Lichtpfades 14 erstreckt, da sich der Sendelichtstrahl 16 nicht wie im vorliegenden Ausführungsbeispiel gezeigt, exakt entlang einer Linie ausbreitet, sondern eine gewisse Divergenz aufweist. Im Idealfall erfolgt die Auslegung des Überwachungssensors 10 derart, dass die den Lichtpfaden 14 zugeordneten Überwachungsfelder aneinander angrenzen. Benachbarte Überwachungsfelder können sich jedoch auch überlappen oder um ein gewisses Maß voneinander beabstandet sein. Im vorliegenden Beispiel sind fünfzehn Lichtpfade 14 bzw. Überwachungsfelder vorgesehen.

Prinzipiell ist die vorliegende Erfindung nicht auf einen Laserscanner, bei dem die einzelnen Lichtpfade 14 zeitlich nacheinander abgetastet werden, beschränkt. Es können auch alle Lichtpfade 14 oder Gruppen von Lichtpfaden 14 synchron abgetastet werden, was eine entsprechende Anzahl von Lichtsender/-emfängerpaaren voraussetzt. Der Überwachungssensor 10 muss ferner nicht notwendigerweise nur eine einzige Abtastfläche aufweisen, die im vorliegenden Beispiel durch die Zeichnungsebene definiert ist, sondern kann auch mehrere Abtastflächen aufweisen, z.B. mehrere parallel voneinander beabstandete Abtastebenen oder mehrere konische Abtastflächen mit unterschiedlichen Azimutwinkeln.

Die Bestimmung des Abstandes zu einem erfassten Objekt kann in an sich bekannter Weise aufgrund der Laufzeit des Sendelichtstrahls 14 oder der Phasenverschiebung zwischen moduliertem Sende- und Empfangslicht erfolgen.

Der Überwachungssensor 10 kann eine integrierte Steuereinheit aufweisen, welche zum Erzeugen von Empfangssignalen auf der Grundlage des von dem Lichtempfänger empfangenen Lichts ausgelegt ist. Die Empfangssignale können spezifisch für ein jeweiliges Überwachungsfeld, in dem Licht von einem Objekt zurückgestreut wurde, Informationen über die Winkelposition dieses Überwachungsfeldes und über den Abstand des Objekts von dem Überwachungssensor umfassen.

Das Schutzfeld 12 wird zyklisch abgetastet, so dass für jeden Lichtpfad 14 bzw. jedes Überwachungsfeld eine zeitliche Abfolge von Empfangssignalen vorliegt.

Der Überwachungssensor 10 kann eine Speichereinrichtung umfassen, welche die Empfangssignale über ein oder mehrere Abtastzyklen speichert.

Die Größe eines erfassten Objekts kann auf der Grundlage des ermittelten Abstandes des Objekts von dem Überwachungssensor 10 und aufgrund der ermittelten Größe des Winkelbereichs, über den sich das erfasste Objekt erstreckt, ermittelt werden. Das Ermitteln der Größe des Winkelbereichs, über den sich das Objekt erstreckt, kann insbesondere auf der Grundlage der Anzahl benachbarter Überwachungsfelder, die durch die Anwesenheit des Objekts verletzt werden und deren Winkelabstände ermittelt werden.

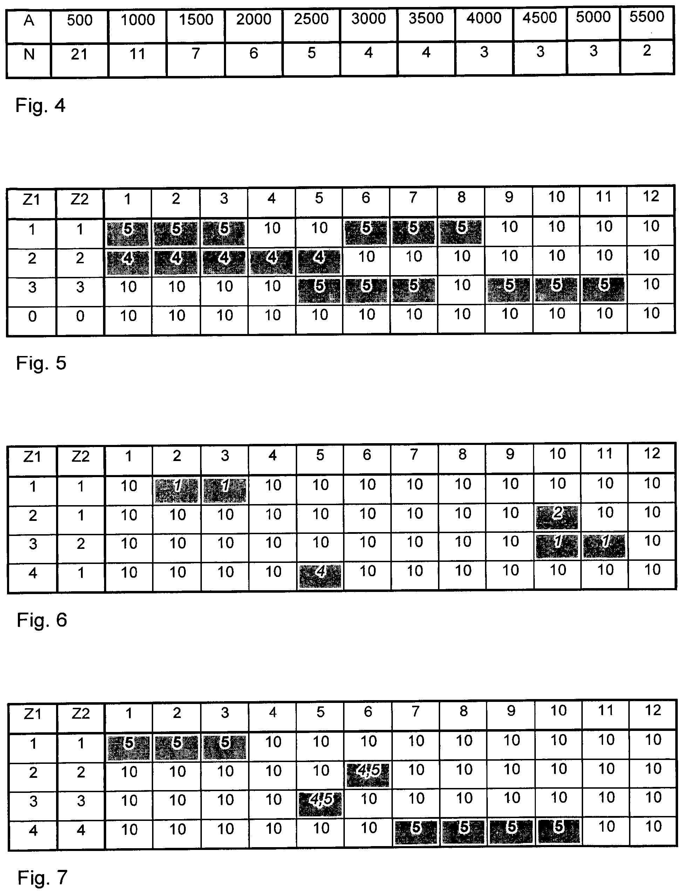

Ein mögliches Verfahren für eine Klassifizierung, ob ein erfasstes Objekt als Großobjekt 18 oder Partikel 20 zu klassifizieren ist, wird mit Bezug auf die Tabelle in Fig. 4 erläutert. Diese Tabelle bezieht sich auf eine beispielhafte Ausgestaltung eines Überwachungssensors, die nicht mit dem Überwachungssensor 10 von Fig. 1 bis 3 übereinstimmen muss. Abweichungen können insbesondere bezüglich der Anzahl der Überwachungsfelder und ihrer Winkelabstände bestehen.

In der oberen Zeile der Tabelle gemäß Fig. 4 sind verschiedene Abstände A in Millimetern angegeben. Jedem Abstand A ist eine Anzahl N von Überwachungsfeldern zugeordnet, die mindestens durch ein Objekt in dem betreffenden Abstand verletzt sein muss, damit ein Objekt als Großobjekt klassifiziert wird. Ist diese Anzahl von verletzten Überwachungsfeldern nicht erreicht, wird das betreffende Objekt als Partikel eingestuft.

Bei der in Fig. 1 dargestellten Konstellation befindet sich ein Großobjekt 18 in einem Abstand r innerhalb des Schutzfeldes 12. Aufgrund der Größe des Großobjekts 18 und dessen Abstand zum Überwachungssensor 10 werden in dieser Konstellation zwei benachbarte Überwachungsfelder verletzt. Die Klassifizierung als Großobjekt 18 erfolgt hier aufgrund eines vorgegebenen Schwellenwerts für die Größe eines Objekts, bei dem der Überwachungssensor 10 ein Objekterfassungssignal ausgeben soll, weil beispielsweise die Gefahr besteht, dass es sich bei dem erfassten Objekt um ein menschliches Gliedmaß handeln könnte. Als Schwellenwert kann beispielsweise eine Größe von 70 mm vorgegeben werden.

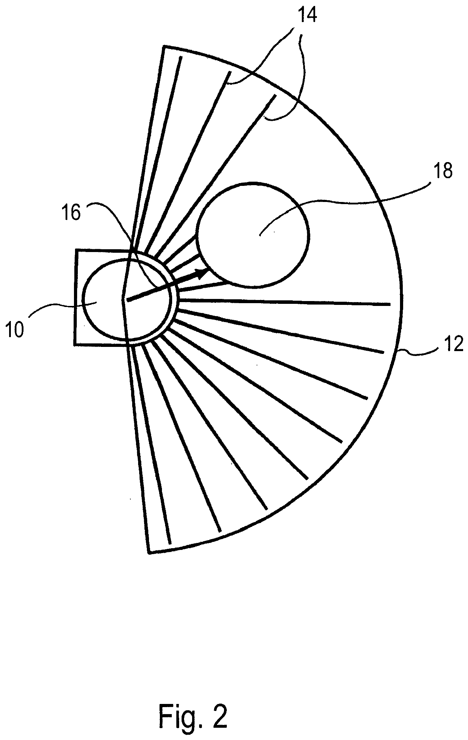

Bei der Konstellation von Fig. 2 befindet sich das Großobjekt 18 nunmehr in einem Abstand r/2 vom Überwachungssensor 10. Aufgrund der geringeren Distanz werden in dieser Konstellation insgesamt vier benachbarte Überwachungsfelder verletzt.

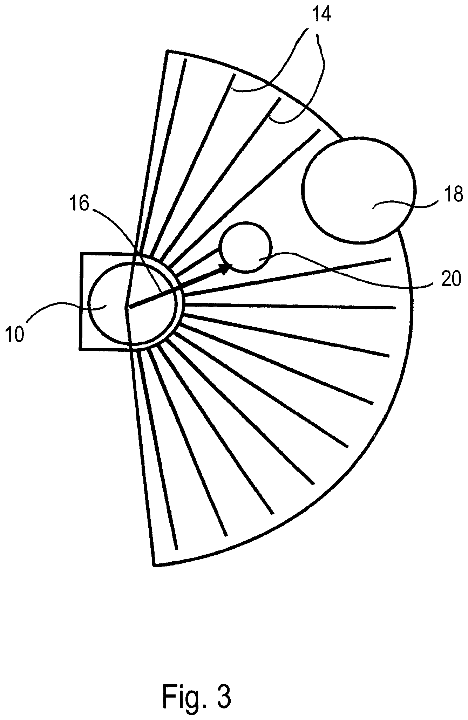

Bei der Konstellation von Fig. 3 befindet sich das Großobjekt 18 wiederum im Abstand r von dem Überwachungssensor 10 (entsprechend Fig. 1).

Weiterhin befindet sich ein kleineres Objekt im Schutzfeld 12, dessen Größe kleiner ist als der vorgegebene Schwellenwert, und das deshalb als Partikel 20 klassifiziert wird. Eine Klassifizierung als Partikel 20 erfolgt beispielsweise für solche Objekte, von denen keine Gefährdung eines Benutzers anzunehmen ist, beispielsweise umherfliegende Späne, Schneeflocken, Regentropfen oder Staubpartikel.

Wie in Fig. 3 gut zu erkennen ist, verletzt das Partikel 20 in der vorliegenden Konstellation dieselben Überwachungsfelder wie das Großobjekt 18. Das Partikel 20 verschattet sozusagen das Großobjekt 18. Bei einem Überwachungssensor, der bei der Erzeugung eines Objekterfassungssignals ausschließlich auf die Größe des erfassten Objekts abstellen würde, würde bei der in Fig. 3 dargestellten Konstellation kein Objekterfassungssignal erzeugt, da lediglich das Partikel 20 erfasst wird und aufgrund seiner Klassifikation als sicherheitsunkritisch angesehen wird. Die sicherheitskritische Schutzfeldverletzung durch das Großobjekt 18 kann aufgrund der Abschattung nicht detektiert werden. Daher stellt die in Fig. 3 dargestellte Konstellation eine sicherheitskritische Situation dar.

Um eine bessere Differenzierung zwischen sicherheitskritischen und nicht sicherheitskritischen Objekten vornehmen zu können, wird außer der Größe von Objekten, die sich innerhalb eines bestimmten Abtastzyklus innerhalb des Schutzfeldes 12 befinden, auch der zeitliche Verlauf der Positionen dieser Objekte berücksichtigt, d.h. es wird nicht nur ein einziger Abtastzyklus für sich betrachtet, sondern mehrere aufeinanderfolgende Abtastzyklen. Aufgrund dieser zeitlichen Differenzierung kann festgestellt werden, ob sich ein Objekt winkelstationär oder beweglich zumindest bezüglich seiner Winkelposition im Schutzfeld 12 aufhält.

Es werden demnach verschiedene Fälle definiert, in denen jeweils die Kriterien für das Erzeugen eines Objekterfassungssignals vorliegen:
In einem ersten Fall wird die Anwesenheit eines als Großobjekt klassifizierten Objekts für eine vorgegebene erste Anzahl von Abtastzyklen detektiert. Das Objekterfassungssignal wird unabhängig davon erzeugt, ob das Großobjekt statisch oder beweglich ist.

In einem zweiten Fall wird ein Objekterfassungssignal erzeugt, wenn zumindest ein als Partikel klassifiziertes Objekt im Schutzfeld detektiert wurde, wobei dieses Partikel zusätzlich die Bedingung erfüllen muss, dass es winkelstationär ist, d.h. sich im Wesentlichen in demselben Überwachungsfeld aufhalten muss. Da sich ein eigentlich winkelstationäres Partikel 20, welches aufgrund seiner Größe und Position beispielsweise nur ein einziges Überwachungsfeld verletzt, an der Grenze von zwei benachbarten Überwachungsfeldern aufhalten kann, kann es beispielsweise aufgrund von Messungenauigkeiten in verschiedenen Abtastzyklen entweder in dem einen oder dem anderen Überwachungsfeld detektiert werden. Somit kann auch der Fall als winkelstationär angesehen werden, dass ein Partikel in verschiedenen Abtastzyklen wechselweise zwei unmittelbar zueinander benachbarte Überwachungsfelder verletzt. Auch der Fall, dass beispielsweise in einem Abtastzyklus ein bestimmtes Überwachungsfeld und in einem darauffolgenden Zyklus zusätzlich ein weiteres, unmittelbar benachbartes Überwachungsfeld verletzt wird, kann als winkelstationär angesehen werden.

Bei dem erfindungsgemäßen Verfahren wird ausgenutzt, dass in das Schutzfeld eindringende Partikel aufgrund ihrer Größe als unkritisch eingestuft werden, solange sie sich in Bewegung befinden, da es unwahrscheinlich ist, dass sie über die gesamte betrachtete Zeitdauer ein an sich sicherheitskritisches Großobjekt verdecken. Hierfür müsste sich das Partikel mit derselben Geschwindigkeit bzw. Winkelgeschwindigkeit und in dieselbe Richtung wie das Großobjekt bewegen. Da dies nur mit äußerst geringer Wahrscheinlichkeit eintreten wird, kann dieser Fall vernachlässigt werden, so dass sich die Verfügbarkeit einer mit dem erfindungsgemäßen Überwachungssensor zu überwachende Maschine deutlich erhöhen lässt, da in das Schutzfeld eindringende, aufgrund ihrer Größe sicherheitsunkritische Partikel nicht zu einer falsch-positiven Erzeugung eines Objekterfassungssignals führen.

Der möglicherweise kritische Fall, dass ein an sich sicherheitskritisches Großobjekt durch ein solches Partikel verdeckt wird und daher unerfasst bleibt, wird durch das Kriterium, wonach ein winkelstationäres Partikel dennoch ein Objekterfassungssignal auslöst, verhindert. Somit geht die Erhöhung der Verfügbarkeit nicht auf Kosten der Sicherheit.

Bei den beiden vorstehend beschriebenen Fallkonstellationen ist es für die Erzeugung eines Objekterfassungssignals erforderlich, dass ein bewegliches oder winkelstationäres, insbesondere stationäres Großobjekt und/oder ein winkelstationäres Partikel jeweils für eine bestimmte Zeitdauer bzw. für eine vorgegebene Anzahl von Zyklen im Schutzfeld anwesend sein müssen. Es ist jedoch eine Konstellation denkbar, bei der ein Großobjekt während einer betrachteten Anzahl von Zyklen nur zeitweise detektiert wird, weil es etwa für einen Teil der Abtastzyklen durch ein Partikel verdeckt wird, wobei das Partikel nur während eines Teils der betrachteten Abtastzyklen anwesend ist.

Für diesen dritten Fall kann gemäß einer vorteilhaften Abwandlung vorgesehen sein, dass vorsichtshalber auch dann ein Objekterfassungssignal erzeugt wird, wenn sich zumindest ein Großobjekt und zumindest ein Partikel jeweils zumindest für einen Teil dieser Zyklen in zumindest einem der Überwachungsfelder befinden, wobei sich diese für die Dauer ihrer Erfassung in diesen aufeinanderfolgenden Zyklen nicht notwendigerweise stets in demselben oder denselben Überwachungsfeldern aufhalten müssen. Mit anderen Worten kann in einem solchen Szenario eine beliebige Kombination von Partikeln und Großobjekten die während einer vorgegebenen Anzahl von aufeinanderfolgenden Abtastzyklen im Schutzfeld anwesend sind, zu einer Erzeugung eines Objekterfassungssignals führen. Durch Anwendung dieses zusätzlichen Kriteriums kann die Sicherheit weiter erhöht werden, wobei jedoch eine gewisse Beeinträchtigung der Verfügbarkeit möglich ist.

Im Folgenden werden mit Bezug auf die Tabellen in Fig. 5 bis 7 beispielhafte Methoden beschrieben, mit denen die für das Erzeugen der Objekterfassungssignale notwendigen Unterscheidungen getroffen werden können.

Zum einen wird ein Großobjektindex definiert, welcher beginnend bei 0 um 1 inkrementiert wird, wenn innerhalb eines jeweiligen Abtastzyklus die Anwesenheit zumindest eines Großobjekts unabhängig von dessen Position festgestellt wird. Wenn in einem der darauffolgenden Zyklen festgestellt wird, dass sich kein Großobjekt innerhalb des Schutzfeldes befindet, wird der Großobjektindex auf 0 zurückgesetzt. Somit wird mittels des Großobjektindex die Anzahl von aufeinanderfolgenden Abtastzyklen gezählt, in denen zumindest ein Großobjekt im Schutzfeld anwesend ist. Wenn der Großobjektindex eine vorgegebene Anzahl von Abtastzyklen erreicht hat, wird ein Objekterfassungssignal erzeugt.

Zum anderen wird für jedes Überwachungsfeld ein zugeordneter Partikelindex definiert, welcher beginnend bei 0 jeweils um 1 inkrementiert wird, wenn in diesem Überwachungsfeld die Anwesenheit eines Partikels festgestellt wurde. Wenn in einem nachfolgenden Abtastzyklus ein zuvor in einem bestimmten Überwachungsfeld anwesendes Partikel nicht mehr in diesem Überwachungsfeld detektiert wurde, wird der betreffende Partikelindex wieder auf 0 zurückgesetzt.

Um auch solche Partikel erfassen zu können, die lediglich im anfangs erläuterten Sinne im Wesentlichen winkelstationär sind, weil sie z.B. zwischen zwei benachbarten Überwachungsfeldern zu "springen" scheinen, kann gemäß einer Abwandlung nicht nur der dem unmittelbar verletzten Überwachungsfeld zugeordnete Partikelindex inkrementiert werden, sondern auch der jeweilige Partikelindex eines oder mehrerer hierzu benachbarter Überwachungsfelder. Ein Zurücksetzen dieser Partikelindizes auf 0 kann insbesondere dann erfolgen, wenn in einem nachfolgenden Abtastzyklus in keinem dieser Überwachungsfelder mehr ein Partikel detektiert wurde.

Für das Erzeugen eines Objekterfassungssignals wird für jeden Abtastzyklus das Maximum der Partikelindizes ermittelt. Wenn das Maximum aller Partikelindizes eine vorgegebene Anzahl erreicht hat, wird ein Objekterfassungssignal erzeugt. Da bewegliche Partikel zumeist dazu führen, dass der Partikelindex eines jeweiligen Überwachungsfeldes wieder auf 0 zurückgesetzt wird, weil das Partikel dieses Überwachungsfeld schon nach einer geringen Anzahl von Abtastzyklen wieder verlassen hat und somit das genannte Maximum die vorgegebene Anzahl nicht erreicht, wird das Kriterium für das Auslösen eines Objekterfassungssignals für diese beweglichen Partikel nicht erfüllt. Lediglich wenn ein Partikel winkelstationär über eine der genannten vorgegebenen Anzahl entsprechenden Anzahl von Abtastzyklen stets in demselben (oder einem unmittelbar hierzu benachbarten) Überwachungsfeld anwesend ist, wird das Maximum die vorgegebene Anzahl erreichen und zum Auslösen eines Objekterfassungssignals führen.

Um auch das Erfassungskriterium gemäß dem vorstehend genannten dritten Fall zu berücksichtigen, kann vorgesehen sein, dass ein Gesamtindex als Summe aus dem Großobjektindex und dem Maximum der Partikelindizes gebildet wird, wobei ein Objekterfassungssignal erzeugt wird, wenn der Gesamtindex eine vorgegebene Anzahl erreicht hat.

Die vorstehend beschriebenen Methoden werden nachfolgend mit Bezug auf die Tabellen in Fig. 5 bis 7 für verschiedene beispielhafte Objektkonstellationen beschrieben, wobei selbstverständlich neben den beschriebenen Objektkonstellationen noch viele weitere Objektkonstellationen denkbar sind und die Aufzählung somit nicht abschließend ist.

In den Tabellen von Fig. 5 bis 7 sind in den ersten beiden Spalten zwei unterschiedliche Indizes Z1, Z2 angegeben, deren Bedeutung nachfolgend noch näher erläutert wird. Wie sich aus der entsprechenden Erläuterung ergeben wird, handelt es sich bei den Indizes Z1 oder Z2 nicht um den bereits beschriebenen Großobjektindex oder den bereits beschriebenen Partikelindex. Die folgenden zwölf Spalten repräsentieren jeweilige Überwachungsfelder, wobei die Ziffern in der ersten Zeile jeweilige Positionsnummern der Überwachungsfelder darstellen. Die zweiten bis fünften Zeilen der Tabellen stehen jeweils für vier aufeinanderfolgende Abtastzyklen des Überwachungssensors. In den durch die Positionsnummern 1 bis 12 und den Zeilen 2 bis 5 definierten Tabellenfeldern sind jeweilige gemessene Abstandswerte für ein jeweils erfasstes Objekt in Metern angegeben. Ein Wert von 10 steht hier für ein Überwachungsfeld, welches frei von Objekten ist. Überwachungsfelder, für die ein Objekt detektiert wurde, sind grau hinterlegt, wobei die betreffenden Abstandwerte fett gedruckt sind, wenn diese ein Großobjekt repräsentieren und kursiv gedruckt sind, wenn diese ein Partikel repräsentieren.

Der Indexwert Z2 repräsentiert den genannten Gesamtindex, der sich wie erwähnt aus dem Großobjektindex und der Summe aller Partikelindizes zusammensetzt. Um den Unterschied zu einem herkömmlichen Überwachungssensor zu verdeutlichen, welcher alle Objekte unabhängig von ihrer Größe und/oder Bewegung erfasst, ist ein entsprechender Vergleichsindex Z1 jeweils in der ersten Spalte der Tabellen angegeben, welcher bei jeder Detektion eines Objekts inkrementiert wird und nur dann zurückgesetzt wird, wenn in einem Zyklus weder ein Großobjekt noch ein Partikel detektiert wurde.

Bei allen Objektkonstellationen wird bei diesem Beispiel davon ausgegangen, dass ein Objekterfassungssignal erzeugt wird, wenn der Gesamtindex Z2 bzw. der Vergleichsindex Z1 den Wert 4 erreicht hat.

Fig. 5 repräsentiert eine Objektkonstellation, bei der sich zwei nicht winkelstationäre Großobjekte während drei aufeinanderfolgender Abtastzyklen innerhalb des Schutzfeldes befinden. In den ersten drei Abtastzyklen wird der Großobjektindex jeweils um 1 inkrementiert, so dass dieser nach dem dritten Abtastzyklus 3 beträgt. Da sich die Großobjekte im vierten Abtastzyklus nicht mehr innerhalb des Schutzfeldes befinden, wird der Großobjektindex auf 0 zurückgesetzt. Da in der Objektkonstellation von Fig. 5 keine Partikel erfasst wurden, entspricht der Gesamtindex Z2 dem Großobjektindex.

Der Vergleichsindex Z1 verhält sich entsprechend dem Gesamtindex Z2.

Bei der Objektkonstellation, die der Tabelle von Fig. 6 zugrunde liegt, bewegen sich mehrere Partikel zufällig durch das Schutzfeld. Im ersten Abtastzyklus befinden sich Partikel in den Überwachungsfeldern 2 und 3. Entsprechend werden die Partikelindizes dieser Überwachungsfelder beginnend von 0 um 1 inkrementiert. Das Maximum der Partikelindizes und damit der Gesamtindex Z2 beträgt 1. Im zweiten Abtastzyklus werden die Partikelindizes der Überwachungsfelder 2 und 3 zurückgesetzt und dafür der Partikelindex des Überwachungsfeldes 10 auf 1 inkrementiert. Dadurch verbleibt das Maximum der Partikelindizes und darauf basierend der Gesamtindex Z2 auf dem Wert 1. Im dritten Abtastzyklus nähert sich das Partikel dem Überwachungssensor etwas an und wird zum zweiten Mal im Überwachungsfeld 10 und zusätzlich erstmalig auch im Überwachungsfeld 11 detektiert. Der auf 2 inkrementierte Partikelindex des Überwachungsfeldes 10 führt dazu, dass das Maximum und somit auch der Gesamtindex Z2 den Wert 2 erreicht. Im vierten Abtastzyklus sind die Überwachungsfelder 10 und 11 wieder frei, so dass die entsprechenden Partikelindizes zurückgesetzt werden. Da jedoch erstmals ein Partikel im Überwachungsfeld 5 detektiert wird, führt dies dazu, dass das Maximum und somit der Gesamtindex Z2 den Wert 1 annehmen. Ein Objekterfassungssignal wird gemäß dem erfindungsgemäßen Verfahren jedoch nicht ausgelöst, da der Gesamtindex Z2 den Grenzwert 4 nicht erreicht.

Im Unterschied hierzu wird bei einem herkömmlichen Überwachungssensor jede Detektion eines Partikels zu einem Inkrementieren des Vergleichsindex Z1 führen, so dass nach dem vierten Abtastzyklus ein Objekterfassungssignal erzeugt wird, was jedoch als falsch-positives Ergebnis zu werten ist. Somit zeigt sich hier ein Vorteil des erfindungsgemäßen Verfahrens, da dieses derartige falsch-positive Objekterfassungssignale vermeidet und somit die Verfügbarkeit einer angeschlossenen Maschine erhöht.

Schließlich repräsentiert die Tabelle gemäß Fig. 7 eine Objektkonstellation, bei der ein Objekt zunächst erfasst wird, für zwei Zyklen hinter einem Partikel verschwindet, und in einem vierten Zyklus erneut erfasst wird. Im ersten Abtastzyklus wird ein Großobjekt erfasst und führt dazu, dass der Großobjektindex und damit der Gesamtindex Z2 den Wert 1 annimmt. Im zweiten Abtastzyklus verschwindet das Großobjekt, wobei jedoch stattdessen ein Partikel an anderer Position erfasst wird. Aufgrund dieser unmittelbar folgenden Erfassung eines Partikels unterbleibt ein Zurücksetzen des Großobjektindex. Zusätzlich wird der Partikelindex für das Überwachungsfeld 6 auf 1 gesetzt, so dass der Gesamtindex Z2 den Wert 1+1=2 annimmt. Im dritten Abtastzyklus wird wiederum ein Partikel erfasst, welches im Überwachungsfeld 5 erfasst wird, während das Überwachungsfeld 6 als frei erkannt wird. Da die Überwachungsfelder 5 und 6 unmittelbar benachbart sind und auch die Abstandswerte identisch sind (4,5 m), wird davon ausgegangen, dass es sich um ein winkelstationäres Partikel handelt. Somit wird im dritten Abtastzyklus der Partikelindex des Überwachungsfeldes 6 um 1 auf 2 inkrementiert. Der Gesamtindexwert Z2 nimmt somit den Wert 3 an, der sich aus einem Großobjektindexwert 1 und einem Maximumwert 2 der Partikelindizes zusammensetzt. Im vierten Abtastzyklus erscheint das Partikel im Überwachungsfeld 5 bzw. 6 nicht mehr, dafür wird jedoch wiederum ein Großobjekt in den Überwachungsfeldern 7 bis 10 detektiert. Da wiederum kein freies Schutzfeld erkannt wurde, unterbleibt ein Zurücksetzen der Partikelindizes der Überwachungsfelder 5 bzw. 6 und der Großobjektindex wird um 1 auf 2 inkrementiert. Damit nimmt der Gesamtindex Z2 den Wert 4 an, welcher sich aus einem Großobjektindexwert 2 und einem Maximum der Partikelindizes von 2 zusammensetzt.

Ein Vergleich der erfindungsgemäßen Methode mit der herkömmlichen Methode für die Objektkonstellation gemäß Fig. 7 anhand der Indexwerte Z1 und Z2 zeigt, dass in beiden Fällen ein Objekterfassungssignal erzeugt wird und somit auch die Objektkonstellation, die der Fig. 7 zugrunde liegt, zuverlässig durch das erfindungsgemäße Verfahren erkannt wird und zu einer Abschaltung einer angeschlossenen Maschine führt.

Bei den beschriebenen Beispielen entspricht ein Lichtpfad jeweils einem einzelnen Überwachungsfeld. Grundsätzlich ist es aber auch möglich, dass jeweils zwei oder mehr Lichtpfade zu einem Überwachungsfeld zusammengefast werden.

### Bezugszeichenliste

- 10: Überwachungssensor
- 12: Schutzfeld
- 14: Lichtpfad
- 16: Sendelichtstrahl
- 18: Großobjekt
- 20: Partikel

## Patentansprüche

1. Verfahren zum Betreiben eines abstandsmessenden Überwachungssensors (10) zur Überwachung eines zumindest zweidimensionalen Schutzfeldes (12), welches in mehrere sektorförmige, zyklisch abtastbare Überwachungsfelder unterteilt ist, wobei der Überwachungssensor (10) zumindest einen Lichtsender und zumindest einen Lichtempfänger umfasst, mit den Schritten:
- Aussenden eines Sendelichtstrahls (16) in das Schutzfeld (12) durch den Lichtsender,
- Empfangen von Licht, welches von einem gegebenenfalls in dem Schutzfeld vorhandenen Objekt (18, 20) reflektiert oder remittiert wird, durch den Lichtempfänger,
- Erzeugen eines spezifischen Empfangssignals für das jeweilige Überwachungsfeld auf der Grundlage des empfangenen Lichts, wobei ein jeweiliges Empfangssignal Informationen über die Winkelposition des Überwachungsfeldes und über den Abstand eines darin befindlichen Objekts (18, 20) von dem Überwachungssensor umfasst,
wobei innerhalb eines Zyklus alle Überwachungsfelder des Schutzfeldes (12) einmal abgetastet werden,
- Ermitteln der Größe eines Winkelbereichs, über den sich ein jeweiliges erfasstes Objekt (18, 20) erstreckt,
- Ermitteln der Größe des Objekts (18, 20) auf der Grundlage des ermittelten Abstandes und aufgrund der ermittelten Größe des Winkelbereichs,
- Klassifizieren des Objekts als Partikel (20) oder Großobjekt (18) auf der Grundlage der ermittelten Größe des Objekts und eines vorbestimmten Schwellenwertes für die Größe, wobei das Objekt als Partikel klassifiziert wird, wenn es kleiner als der Schwellenwert ist, und als Großobjekt klassifiziert wird, wenn es größer als der Schwellenwert ist,
**gekennzeichnet durch**
- Prüfen, ob sich zumindest ein Großobjekt (18) für eine vorgegebene erste Anzahl von aufeinanderfolgenden Zyklen in zumindest einem der Überwachungsfelder befindet,
- Prüfen, ob sich zumindest ein Partikel (20) für eine vorbestimmte zweite Anzahl von aufeinanderfolgenden Zyklen im Wesentlichen winkelstationär in zumindest einem Überwachungsfeld befindet, und
- Erzeugen eines Objekterfassungssignals auf der Grundlage der Empfangssignale, wenn festgestellt wird, dass zumindest eine der in den beiden Prüfschritten geprüften Bedingungen erfüllt ist.

2. Verfahren nach Anspruch 1,
wobei die erste Anzahl und die zweite Anzahl gleich sind.

3. Verfahren nach Anspruch 1 oder 2,
wobei ferner auch dann ein Objekterfassungssignal erzeugt wird, wenn für eine vorgegebene dritte Anzahl von aufeinanderfolgenden Zyklen festgestellt wird, dass sich zumindest ein Großobjekt (18) und zumindest ein Partikel (20) jeweils zumindest für einen Teil dieser Zyklen in zumindest einem der Überwachungsfelder befinden.

4. Verfahren nach Anspruch 1 oder 2,
wobei ferner auch dann ein Objekterfassungssignal erzeugt wird, wenn für eine vorgegebene dritte Anzahl von aufeinanderfolgenden Zyklen festgestellt wird, dass sich zumindest ein Großobjekt (18) und zumindest ein Partikel (20) jeweils zumindest für einen Teil dieser Zyklen in zumindest einem der Überwachungsfelder befinden und das zumindest eine Partikel (20) im Wesentlichen winkelstationär ist.

5. Verfahren nach einem der vorhergehenden Ansprüche,
wobei ein Großobjektindex und für jedes Überwachungsfeld ein jeweiliger Partikelindex vorgesehen sind,
wobei das Feststellen, ob sich zumindest ein Großobjekt (18) für eine vorgegebene erste Anzahl von aufeinanderfolgenden Zyklen in zumindest einem der Überwachungsfelder befindet, umfasst, dass der Großobjektindex um 1 inkrementiert wird, wenn in einem Zyklus die Anwesenheit zumindest eines Großobjekts (18) detektiert wurde, und das Erzeugen des Objekterfassungssignals umfasst, dass ein Objekterfassungssignal erzeugt wird, wenn der Großobjektindex die vorgegebene erste Anzahl erreicht hat, und wobei das Feststellen, ob sich zumindest ein Partikel (20) für eine vorgegebene zweite Anzahl von aufeinanderfolgenden Zyklen im Wesentlichen winkelstationär in zumindest einem Überwachungsfeld befindet, umfasst, dass in einem jeweiligen Zyklus ein jeweiliger Partikelindex um 1 inkrementiert wird, wenn in einem Zyklus die Anwesenheit eines Partikels (20) in dem diesem Partikelindex zugeordneten Überwachungsfeld oder einem unmittelbar benachbarten Überwachungsfeld detektiert wurde, und das Erzeugen des Objekterfassungssignals umfasst, dass das Maximum aller Partikelindizes ermittelt wird und ein Objekterfassungssignal erzeugt wird, wenn das Maximum die vorgegebene zweite Anzahl erreicht hat.

6. Verfahren nach einem der Ansprüche 3 oder 4, jeweils in Verbindung mit Anspruch 5,
wobei das Erzeugen eines Objekterfassungssignals, wenn für eine vorgegebene dritte Anzahl von aufeinanderfolgenden Zyklen festgestellt wird, dass sich zumindest ein Großobjekt (18) und zumindest ein Partikel (20) jeweils zumindest für einen Teil dieser Zyklen in zumindest einem der Überwachungsfelder befinden, umfasst, dass die Summe aus dem Großobjektindex und dem Maximum der Partikelindizes gebildet wird, und dass das Objekterfassungssignal erzeugt wird, wenn die Summe die vorgegebene dritte Anzahl erreicht hat.

7. Verfahren nach Anspruch 5 oder 6,
wobei das Feststellen, ob sich zumindest ein Großobjekt (18) für eine vorgegebene erste Anzahl von aufeinanderfolgenden Zyklen in zumindest einem der Überwachungsfelder befindet, ferner umfasst, dass der Großobjektindex zurückgesetzt wird, wenn in einem Zyklus die Abwesenheit von Großobjekten detektiert wurde, und/oder
wobei das Feststellen, ob sich zumindest ein Partikel (20) für eine vorgegebene zweite Anzahl von aufeinanderfolgenden Zyklen im Wesentlichen winkelstationär in zumindest einem Überwachungsfeld befindet, ferner umfasst, dass in einem jeweiligen Zyklus ein jeweiliger Partikelindex zurückgesetzt wird, wenn für das zugeordnete Erfassungsfeld in dem unmittelbar vorhergehenden Zyklus die Anwesenheit eines Partikels (20) und in dem aktuellen Zyklus die Abwesenheit dieses Partikels detektiert wurde.

8. Verfahren nach Anspruch 6 und 7,
wobei ein Zurücksetzen des Großobjektindex unterbleibt, wenn innerhalb desjenigen Zyklus, in dem die Abwesenheit eines im vorhergehenden Zyklus anwesenden Großobjekts (18) detektiert wurde, zugleich die Anwesenheit eines Partikels (20) detektiert wurde, und/oder
wobei ein Zurücksetzen eines Partikelindex unterbleibt, wenn innerhalb desjenigen Zyklus, in dem die Abwesenheit eines im vorhergehenden Zyklus anwesenden Partikels (20) detektiert wurde, zugleich die Anwesenheit eines Großobjekts (18) detektiert wurde.

9. Verfahren nach einem der vorhergehenden Ansprüche,
wobei das Ermitteln der Größe eines Winkelbereichs, über den sich ein jeweiliges Objekt (18, 20) erstreckt, umfasst, dass die Größe des Winkelbereichs auf der Grundlage der Anzahl benachbarter Überwachungsfelder, bei denen die Anwesenheit eines Objekts (18, 20) bei im Wesentlichen dem gleichen Abstand festgestellt wurde, und deren Winkelabstände ermittelt wird.

10. Verfahren nach einem der vorhergehenden Ansprüche,
wobei die während eines jeweiligen Zyklus erzeugten Empfangssignale für eine vorbestimmte Anzahl an Zyklen gespeichert werden und das Objekterfassungssignal auf der Grundlage der gespeicherten Empfangssignale erzeugt wird.

11. Verfahren nach einem der vorhergehenden Ansprüche,
wobei der Überwachungssensor (10) ein Laserscanner ist, welcher zur Überwachung von einer oder mehreren Abtastflächen ausgelegt ist.

12. Abstandsmessender Überwachungssensor (10) zur Überwachung eines zumindest zweidimensionalen Schutzfeldes (12), welches in mehrere sektorförmige, zyklisch abtastbare Überwachungsfelder unterteilt ist, wobei der Überwachungssensor (10) zumindest einen Lichtsender, zumindest einen Lichtempfänger und eine Steuereinheit umfasst, wobei die Steuereinheit zum Durchführen des Verfahrens gemäß einem der vorhergehenden Ansprüche ausgelegt ist.

## Claims

1. A method of operating a distance-measuring monitoring sensor (10) for monitoring an at least two-dimensional protected field (12) which is divided into a plurality of sector-shaped, cyclically scannable monitored fields, wherein the monitoring sensor (10) comprises at least one light transmitter and at least one light receiver, comprising the steps:
- transmitting a transmitted light beam (16) into the protected field (12) by the light transmitter;
- receiving light by the light receiver, with the light being reflected or remitted by an object (18, 20) which may be present in the protected field;
- generating a specific received signal for the respective monitored field on the basis of the received light, wherein a respective received signal comprises information on the angular position of the monitored field and on the distance of an object (18, 20) located therein from the monitoring sensor,
wherein all the monitored fields of the protected field (12) are scanned once within a cycle;
- determining the size of an angular region over which a respective detected object (18, 20) extends;
- determining the size of the object (18, 20) on the basis of the determined distance and on the basis of the determined size of the angular region;
- classifying the object as a particle (20) or as a large object (18) on the basis of the determined size of the object and of a predetermined threshold value for the size, wherein the object is classified as a particle if it is smaller than the threshold value and is classified as a large object if it is larger than the threshold value,
**characterized by**
- checking whether at least one large object (18) is located in at least one of the monitored fields for a predefined first number of sequential cycles;
- checking whether at least one particle (20) is located substantially at a stationary angle in at least one monitored field for a predetermined second number of sequential cycles; and
- generating an object detection signal on the basis of the received signals when it is found that at least one of the conditions checked in the two checking steps is satisfied.

2. A method in accordance with claim 1,
wherein the first number and the second number are the same.

3. A method in accordance with claim 1 or claim 2,
wherein an object detection signal is furthermore also generated when it is found for a predefined third number of sequential cycles that at least one large object (18) and at least one particle (20) are each located in at least one of the monitored fields for at least some of these cycles.

4. A method in accordance with claim 1 or claim 2,
wherein an object detection signal is furthermore also generated when it is found for a predefined third number of sequential cycles that at least one large object (18) and at least one particle (20) are each located in at least one of the monitored fields for at least some of these cycles and the at least one particle (20) is substantially at a stationary angle.

5. A method in accordance with any one of the preceding claims,
wherein a large object index is provided and a respective particle index is provided for each monitored field;
wherein the finding whether at least one large object (18) is located in at least one of the monitored fields for a predefined first number of sequential cycles comprises the large object index being incremented by 1 when the presence of at least one large object (18) was detected in one cycle and the generation of the object detection signal comprises an object detection signal being generated when the large object index reaches the predefined first number; and
wherein the finding whether at least one particle (20) is located in at least one monitored field substantially at a stationary angle for a predefined second number of sequential cycles comprises a respective particle index being incremented by 1 in a respective cycle when the presence of a particle (20) in the monitored field associated with this particle index or in a directly adjacent monitored field was detected in a cycle and the generation of the object detection signal comprises the maximum of all particle indices being determined and an object detection signal being generated when the maximum has reached the predefined second number.

6. A method in accordance with one of the claims 3 or 4, in each case in conjunction with claim 5,
wherein the generation of an object detection signal comprises, when it is found for a predefined third number of sequential cycles that at least one large object (18) and at least one particle (20) are each located in at least one of the monitored fields for at least some of these cycles, the sum of the large object index and the maximum of the particle indices being formed and the object detection signal being generated when the sum has reached the predefined third number.

7. A method in accordance with claim 5 or claim 6,
wherein the finding whether at least one large object (18) is located in at least one of the monitored fields for a predefined first number of sequential cycles furthermore comprises the large object index being reset when the absence of large objects was detected in a cycle; and/or
wherein the finding whether at least one particle (20) is present in at least one monitored field substantially at a stationary angle for a predefined second number of sequential cycles furthermore comprises a respective particle index being reset in a respective cycle when the presence of a particle (20) was detected for the associated detection field in the directly preceding cycle and the absence of this particle was detected in the current cycle.

8. A method in accordance with claim 6 and claim 7,
wherein a resetting of the large object index is omitted when the presence of a particle (20) was detected at the same time within that cycle in which the absence of a large object (18) was detected that was present in the preceding cycle; and/or
wherein a resetting of a particle index is omitted when the presence of a large object (18) was detected at the same time within that cycle in which the absence of a particle (20) was detected that was present in the preceding cycle.

9. A method in accordance with any one of the preceding claims,
wherein the determination of the size of an angular region over which a respective object (18, 20) extends comprises the size of the angular region being determined on the basis of the number of adjacent monitored fields in which the presence of an object (18, 20) was found at substantially the same distance and their angular intervals being determined.

10. A method in accordance with any one of the preceding claims,
wherein the received signals generated during a respective cycle are stored for a predefined number of cycles and the object detection signal is generated on the basis of the stored received signals.

11. A method in accordance with any one of the preceding claims,
wherein the monitoring sensor (10) is a laser scanner which is configured for monitoring one or more scanning surfaces.

12. A distance-measuring monitoring sensor (10) for monitoring an at least two-dimensional protected field (12) which is divided into a plurality of sector-shaped, cyclically scannable monitored fields, wherein the monitoring sensor (10) comprises at least one light transmitter, at least one light receiver and a control unit, with the control unit being configured for carrying out the method in accordance with any one of the preceding claims.

## Revendications

1. Procédé pour faire fonctionner un capteur de surveillance (10) mesurant une distance et destiné à surveiller un champ de protection (12) au moins bidimensionnel qui est subdivisé en plusieurs champs à surveiller en forme de secteurs et susceptibles d'être échantillonnés cycliquement, dans lequel le capteur de surveillance (10) comprend au moins un émetteur de lumière et au moins un récepteur de lumière, comprenant les étapes suivantes consistant à :
- émettre un rayon lumineux d'émission (16) dans le champ de protection (12) par l'émetteur de lumière,
- recevoir la lumière, réfléchie ou réémise par un objet (18, 20) présent le cas échéant dans le champ de protection, par le récepteur de lumière,
- générer un signal de réception spécifique pour le champ à surveiller respectif en se basant sur la lumière reçue, un signal de réception respectif comprenant des informations relatives à la position angulaire du champ à surveiller et à la distance de l'objet (18, 20) situé dans celui-ci par rapport au capteur de surveillance,
dans lequel, durant un cycle, tous les champs à surveiller du champ de protection (12) sont échantillonnés une fois,
- déterminer la taille d'une plage angulaire sur laquelle s'étend un objet détecté respectif (18, 20),
- déterminer la taille de l'objet (18, 20) en se basant sur la distance déterminée et sur la taille déterminée de la plage angulaire,
- classer l'objet comme une particule (20) ou comme un grand objet (18) en se basant sur la taille déterminée de l'objet et sur une valeur seuil prédéfinie pour la taille, l'objet étant classé comme une particule s'il est plus petit que la valeur seuil, et étant classée comme un grand objet s'il est plus grand que la valeur seuil,
**caractérisé par** les étapes consistant à
- vérifier si au moins un grand objet (18) se trouve dans l'un au moins des champs à surveiller pendant un premier nombre donné de cycles consécutifs,
- vérifier si au moins une particule (20) se trouve dans au moins un champ à surveiller sensiblement de façon stationnaire vis-à-vis de l'angle pendant un second nombre prédéfini de cycles consécutifs, et
- générer d'un signal de détection d'objet en se basant sur les signaux de réception lorsqu'il est constaté qu'au moins une des conditions vérifiées dans les deux étapes de vérification est satisfaite.

2. Procédé selon la revendication 1,
dans lequel le premier nombre et le second nombre sont identiques.

3. Procédé selon la revendication 1 ou 2,
dans lequel un signal de détection d'objet est généré même lorsqu'il est constaté, pendant un troisième nombre donné de cycles consécutifs, qu'au moins un grand objet (18) et au moins une particule se trouvent dans au moins un des champs à surveiller respectivement pendant une partie au moins de ces cycles.

4. Procédé selon la revendication 1 ou 2,
dans lequel un signal de détection d'objet est généré même lorsqu'il est constaté, pendant un troisième nombre donné de cycles consécutifs, qu'au moins un grand objet (18) et au moins une particule se trouvent dans au moins un des champs à surveiller respectivement pendant une partie au moins de ces cycles, et que ladite au moins une particule (20) est sensiblement stationnaire vis-à-vis de l'angle.

5. Procédé selon l'une des revendications précédentes,
dans lequel on prévoit un indice de grand objet et pour chaque champ à surveiller un indice de particule respectif,
dans lequel la constatation si au moins un grand objet (18) se trouve dans au moins un des champs à surveiller pendant un premier nombre donné de cycles consécutifs inclut que l'indice de grand objet est incrémenté de 1 lorsque, dans un cycle, on a détecté la présence d'au moins un grand objet (18), et la génération du signal de détection d'objet inclut qu'un signal de détection d'objet est généré lorsque l'indice de grand objet a atteint le premier nombre donné, et
la constatation si au moins une particule (20) se trouve dans au moins un champ à surveiller de façon sensiblement stationnaire vis-à-vis de l'angle pendant un second nombre donné de cycles consécutifs inclut que l'indice de particule respectif est incrémenté de 1 pendant un cycle respectif lorsque, dans un cycle, la présence d'au moins une particule (20) dans le champ à surveiller associé à cet indice de particule ou dans un champ à surveiller directement voisin a été détectée, et la génération du signal de détection d'objet inclut que le maximum de tous les indices de particule est déterminé et qu'un signal de détection d'objet est généré lorsque le maximum a atteint le second nombre donné.

6. Procédé selon l'une des revendications 3 ou 4, chacune en association avec la revendication 5,
dans lequel, lorsqu'il est constaté pendant un troisième nombre donné de cycles consécutifs qu'au moins un grand objet (18) et au moins une particule (20) se trouvent dans au moins un des champs à surveiller pendant une partie au moins de ces cycles, la génération d'un signal de détection d'objet inclut que la somme de l'indice de grand objet et du maximum des indices de particule est formée et que le signal de détection d'objet est généré lorsque la somme a atteint le troisième nombre donné.

7. Procédé selon la revendication 5 ou 6,
dans lequel la constatation si au moins un grand objet (18) se trouve dans au moins un des champs à surveiller pendant un premier nombre donné de cycles consécutifs inclut en outre que l'indice de grand objet est réinitialisé lorsque, dans un cycle, l'absence de grands objets a été détectée et/ou dans lequel
la constatation si au moins une particule (20) se trouve dans au moins un champ à surveiller de façon sensiblement stationnaire vis-à-vis de l'angle pendant un second nombre donné de cycles consécutifs inclut en outre qu'un indice de particule respectif est réinitialisé dans un cycle respectif lorsque, pour le champ de détection associé, la présence d'une particule (20) dans le cycle directement précédent et l'absence de cette particule dans le cycle actuel ont été détectées.

8. Procédé selon la revendication 6 et 7,
dans lequel une réinitialisation de l'indice de grand objet n'a pas lieu lorsque, pendant le cycle dans lequel l'absence d'un grand objet (18) présent dans le cycle précédent a été détectée, simultanément la présence d'une particule (20) a été détectée, et/ou
dans lequel une réinitialisation d'un indice de particule n'a pas lieu lorsque, pendant le cycle dans lequel l'absence d'une particule (20) présente dans le cylindre précédent a été détectée, simultanément la présence d'un grand objet (18) a été détectée.

9. Procédé selon l'une des revendications précédentes,
dans lequel la détermination de la taille d'une plage angulaire sur laquelle s'étend un objet respectif (18, 20) inclut que la taille de la plage angulaire est déterminée en se basant sur le nombre de champs à surveiller voisins dans lesquels la présence d'un objet (18, 20) a été constatée à une distance sensiblement égale, et que leurs distances angulaires sont déterminées.

10. Procédé selon l'une des revendications précédentes,
dans lequel les signaux de réception, générés pendant un cycle respectif, sont mémorisés pendant un nombre prédéfini de cycles et le signal de détection d'objet est généré en se basant sur les signaux de réception mémorisés.

11. Procédé selon l'une des revendications précédentes,
dans lequel le capteur de surveillance (10) est un scanneur laser qui est conçu pour surveiller une ou plusieurs surfaces à échantillonner.

12. Capteur de surveillance (10) mesurant une distance et destiné à surveiller un champ de protection (12) au moins bidimensionnel qui est subdivisé en plusieurs champs à surveiller en forme de secteurs et susceptibles d'être échantillonnés cycliquement, dans lequel le capteur de surveillance (10) comprend au moins un émetteur de lumière, au moins un récepteur de lumière et une unité de commande, l'unité de commande étant conçue pour mettre en oeuvre le procédé selon l'une des revendications précédentes.
